# EUROPEAN PATENT APPLICATION

(11) **EP 4 764 462 A1**
(43) Date of publication of application: **24.06.2026**
(21) Application number: 24221593.7
(22) Date of filing: 19.12.2024
(51) Int. Cl.: G01N 21/88

(54) **METHOD AND SYSTEM FOR INSPECTING THE OUTER SKIN OF AN AIRCRAFT OR A COMPONENT THEREOF**

(71) Applicant: Airbus S.A.S., 31700 Blagnac (FR)
(72) Inventor: Meng, Liu, 82024 Taufkirchen (DE); Sayeh, Mohamed, 82024 Taufkirchen (DE)
(74) Representative: KASTEL Patentanwälte PartG mbB

(57) **Abstract**

A method and a system for inspecting the outer skin of an aircraft or a component thereof comprise scanning a surface (12) of an outer skin of an aircraft with a line scan camera unit (14) while the surface (12) is illuminated with a first light field (11) and with a second light field (19), and generating image data representing the surface (12) while it is scanned. The image data is processed, wherein defects of the surface (12) as well as their characteristics and physical locations are automatically determined from the image data representing the surface (12) during its illumination with the first light field (11) and from the image data representing the surface (12) during its illumination with the second light field (13). The defects, their characteristics and their physical locations are output. The first and second light fields (11, 13) may be formed as alternating bright field illumination (17) and dark field illumination (19), or as light of a first color and light of a second color.

## Description

The invention relates to a method for inspecting the outer skin of an aircraft or a component thereof. Further, the invention relates to a system for inspecting the outer skin of an aircraft or a component thereof.

Inspecting the outer skin of an aircraft or of a component of an aircraft is necessary during manufacturing in order to detect defects of the surface. Further, regular inspection of the outer skin of aircrafts needs to be performed. Examples include the fuselage surface inspection, like e.g. the forward fuselage surface inspection and afterward fuselage surface inspection, as well as painted sub-assembly surface inspection, etc. It is unacceptable for the outer skin of an aircraft to have an unpainted, uncovered, raw metal exposure area, or a primer surface having these or other defects.

The inspection of the primer surface on an outer skin of an aircraft or aircraft component during manufacturing is particularly important. The primer surface may comprise a variety of defects like e.g. scratches, dents, rivet related defects, blend-outs and many others. Such defects are quite often very small so that they can hardly be detected with the naked eye reliably.

For example, plastic deformations like e.g. dents may have a depth of 20 µm only. Scratches in which a part of the surface is removed can be very small but nevertheless need a treatment to remove sharp edges and to provide smooth transitions. Some of the defects may be particularly relevant for safety, e.g. when they are related to rivets or rivet connections of the related component or part.

The variety of defects occurs not only on primer surfaces but also on the surfaces of final paintings and need to be detected in order to be able to repair the surface accordingly. In addition, custom paint surface inspection becomes more and more important.

The defects may occur on painted surfaces of metallic parts of the aircraft, as well as on composite parts.

Aircraft surface inspection needs to be performed on the very large scale. For example, surfaces of more than 400 m² in case of an Airbus A320 for example, and even more than 800 m² in case of larger aircrafts like e.g. the Airbus A350 need to be inspected. Thus, the surface inspection needs to be performed on all types of aircrafts up to very large aircrafts and their components.

The time needed for inspecting the parts during manufacturing as well as for inspection of the whole aircraft surface is an important cost factor. However, the surface inspection needs to be performed with a very high accuracy in order to detect all defects on a primer surface or on a final painting.

It is the object of the invention to detect the defects with high accuracy while reducing the time needed for aircraft surface inspection.

The object is solved by a method for inspecting the outer skin of an aircraft or a component thereof, comprising: scanning a surface of an outer skin of an aircraft with a line scan camera unit while the surface is illuminated with a first light field and with a second light field; generating image data representing the surface while it is scanned; processing the image data, wherein defects of the surface as well as their characteristics and physical locations are automatically determined from the image data representing the surface during its illumination with the first light field and from the image data representing the surface during its illumination with the second light field; and outputting the defects, their characteristics and their physical locations.

Preferably, first light field is formed as a bright field illumination or a dark field illumination at a relatively large angle to the surface, and the second light field is formed as a dark field illumination or a dark field illumination at a relatively small angle to the surface, wherein the surface is alternately illuminated with the first light field and the second light field in a large number of illumination cycles while the image data is generated.

Preferably, the surface is alternately illuminated with the bright field illumination and with the dark field illumination in a large number of illumination cycles while the image data is generated.

Preferably, the bright field illumination and the dark field illumination of the surface are provided as alternating flashes.

Preferably, at least two rows of pixels are generated in each illumination cycle.

Preferably, one row of pixels is generated by the camera unit during the bright field illumination and the other row of pixels is generated by the camera unit during the dark field illumination of the surface.

Preferably, the first light field is provided by generating light of a first color and the second light field is provided by generating light of a second color, wherein the line scan camera unit comprises a color chip to generate the image data in a first channel assigned to the first light field and in a second channel assigned to the second light field.

In particular, three rows of pixels may be generated by the line scan camera unit, representing Red, Green, and Blue. In this case, one cycle has a multiply of three rows of pixels. An advanced three-chip color camera may be used.

Preferably, the line scan camera unit comprises a stereo line scan camera.

Preferably, the image data generated during illumination with the first light field and the image data generated during illumination with the second light field is interlaced by the line scan camera unit and de-interlaced during the processing of the image data.

Preferably, the frequency of the illumination cycles is between 10 Hz and 20 kHz. Other frequencies are possible as well. The frequency depends on the required inspection speed, encoder trigger capability, camera acquisition capability, and software efficiency.

Preferably, the detected defects are classified according to their criticality during the processing, based on their individual characteristics determined from the image data generated during illumination with the first light field and the image data generated during illumination with the second light field.

Preferably, a color information is used during the processing of the image data generated during the bright field illumination and the image data generated during dark field illumination.

Preferably, a 3d-model of each defect is generated. In particular, the 3D-model generation is before the defect detection

According to another aspect of the invention, a system for inspecting the outer skin of an aircraft or a component thereof is provided, comprising: a line scan camera unit for scanning a surface of an outer skin of an aircraft to generate image data of the surface, and an illumination entity configured to illuminate the surface with a first light field and with a second light field when it is scanned; wherein the system is designed for providing the image data to a processing unit configured for detecting defects of the surface as well as their characteristics and physical locations from the image data representing the surface during its illumination with the first light field and from the image data representing the surface during its illumination with the second light field.

Preferably, the system comprises a processing unit and a user interface for outputting the defects, their characteristics and their physical locations.

Preferably, the illumination entity comprises a first illumination unit configured to generate the first light field as a bright field illumination or as a dark field illumination at a relatively large angle to the surface, and a second illumination unit configured to generate the second light field as a dark field illumination or as a dark field illumination at a relatively small angle to the surface. Preferably, wherein the first light field and the second light field are alternating in a large number of illumination cycles or are formed as alternating flashes.

Preferably, the first and second illumination units are configured to generate the bright field illumination and the dark field illumination as alternating flashes.

Preferably, the line scan camera unit comprises a stereo line scan camera for generating at least two rows of pixels in each illumination cycle, wherein one row of pixels is generated during the bright field illumination and the other row of pixels is generated during the dark field illumination.

Preferably, the illumination entity is configured to generate light of a first color as the first light field and light of a second color as the second light field.

Preferably, the line scan camera unit comprises a color chip to generate image data in a first channel assigned to the first light field and in a second channel assigned to the second light field.

Preferably, the line scan camera is configured to interlace the image data generated during illumination with the first light field and the image data generated during illumination with the second light field, and the processing unit is configured to de-interlace the image data.

Preferably, the processing unit is configured to classify the defects according to their criticality based on their individual characteristics determined from the image data generated during the illumination with the first light field and during the illumination with the second light field.

Preferably, the processing unit is configured to generate color information of each defect from the image data generated during illumination with the first light field and the image data generated during illumination with the second light field.

Preferably, the system comprises a mirror arrangement provided in the optical path between the line scan camera unit and the surface to be scanned.

Thus, the system can have a compact form factor with the help of mirrors to shrink the working distance, depending on working space restrictions,

Preferably, the line scan camera unit, the first illumination unit and the second illumination unit are mechanically connected to form an inspection unit. Thus, they can be moved together relative to the surface to be inspected.

Preferably, the line scan camera unit can be extended sideways through connecting multiple line scan units or multiple stereo line scan units. Thus, the field of view can be enlarged and important features of aircraft like rivet lines can be captured in one scan. Thus, the system requires less calibration and software efforts to localize defect features through data stitching.

Preferably, the inspection unit is configured for being mounted on a robot arm, gantry, or crane system to be moved.

Preferably, the first illumination unit is configured in a way that the generated light hits the surface to be inspected at a relatively high angle, whereas the light of the second illumination unit hits that surface at a relatively low angle.

The angle at which the light generated by the first illumination unit hits the surface to be inspected is for example between 50° and 85°, preferably between 65° and 80°, and most preferably around 70° and more. The angle at which the light generated by the second illumination unit hits the surface is for example less than 50°, preferably less than 50° and most preferably less than 40°.

The two illumination units are triggered at different time frames. A full cycle of acquisition includes one dark field flash and one bright field flash. Depending on the speed of the system scanning the surface, and the resolution required, the cycle frequency can range e.g. from 10 Hz to 20 kHz.

The travel speed of the inspection unit relative to the inspected surface depends on the accuracy of the measurement. The accuracy may be for example 10 times the size of the smallest defect. For example, if a scratch has a size of e.g. 1 mm, the trigger or illumination cycle distance between the line scans is 0.1 mm, which means that 10 triggers are needed per millimeter. In this case, at an illumination cycle frequency of 100 Hz, the travel speed of the inspection unit relative to the inspected surface is 10 mm/s. However, the travel speed can be much higher, for example 1 m/s and more, since the frequency of the illumination cycles with alternating bright field illumination and dark field illumination may be for example 10 kHz and more.

The system is e.g. configured as an exterior inspection sensor system. It may detect geometrical and non-geometrical defects. In particular, it may comprise one or more color stereo line scan cameras, two light field illuminations, and accessories for controlling.

The defects which are detected by the inspection system may have different properties. The defects comprise e.g. inward directed dents, outward directed dents, scratches, blend-outs or blobs on the surface, defects related to rivets and riveting, deformations of the surface, surface removals, paint quality (thick paint, thin paint, etc.), foreign objects and many others.

In particular, more than 15 types of defects have been identified which can be detected by the system. The inspection system described here can also measure the geometrical size of the defects in metric units without complex calibration or registration procedures. In the method and system described here, the determined properties of the defects are used to automatically classify the defects according to their criticality.

With the two different light field technologies, the system can find all the defects that impact the primer outer skin quality or the quality of the final painting: The bright field illumination brings most of the features with high contrast in the data. It is also a basis for generating a 3D height map of the scanned surface. However, when the scanned surface is specularly reflective, the contrast is drastically reduced. This leads to missing data due to high reflection, which results in a lack of direct proof for a critical defect. The dark field illumination creates a higher contrast. This provides critical information, as it determines the criticality of certain defects, like e.g. scratches and blend-outs, which may have an unpainted, uncovered, raw metal exposure area, which are unacceptable on the outer skin of an aircraft.

According to the invention, the two types of illumination work together to cover 100% use cases in the primer skin surface inspection with a compact housing and ease the synchronization effort compared to two separate systems. A large variety of different types of defects can be detected by the system in only one measurement run. It is not necessary to change the inspection system in order to detect the defects.

In certain situations, the space is limited for the inspection system, and it is desired to have a compact design for the narrow working space or reduce the torque on a motion system that drives the inspection system. This is achieved by adding highly reflective materials like mirrors to fold the optical path. To further reduce the weight of the system, all subcomponents can share the same housing.

In certain situations, the geometrical defects are not required. The system can be reduced to normal line scan camera units without the stereo capability activated. This further reduces data volume to be processes and further increases inspection speed.

The inspection system according to the invention can in particular be used for primer outer skin inspection of aircrafts like e.g. the Airbus A320 and other aircrafts which may be smaller or larger.

Embodiments of the invention are described in more detail with reference to the accompanying drawings, in which
- **Fig. 1**: depicts a schematic side view of an inspection system according to a preferred embodiment of the invention;
- **Fig. 2**: depicts a schematic front view of the inspection system shown in Fig. 1, wherein the viewing angles of the camera unit are shown;
- **Fig. 3**: depicts a schematic side view of the inspection system according to a second preferred embodiment of the invention;
- **Fig. 4**: depicts a schematic front view of the inspection system shown in Figs. 1 and 2 when the bright field illumination is active;
- **Fig. 5**: depicts a schematic front view of the inspection system shown in Figs. 1 and 2 when the dark field illumination is active; and
- **Fig. 6**: depicts a flow chart of an inspection method according to a preferred example of the invention.

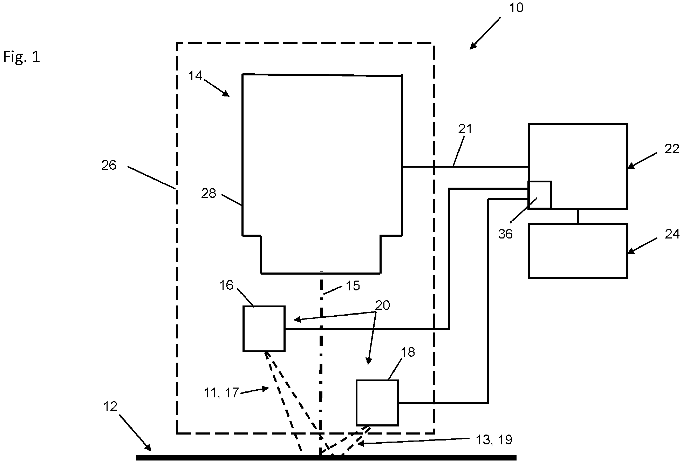

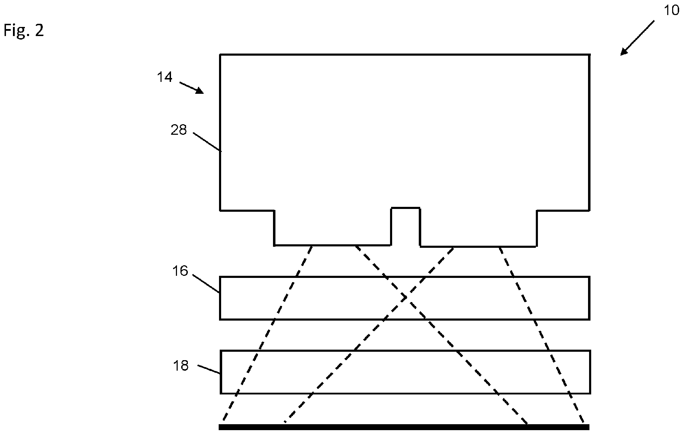

Reference is made to **Figs. 1** **and** **2****,** wherein Fig. 1 depicts a side view of a system 10 for inspecting an outer skin 12 of an aircraft or of an aircraft component according to a preferred embodiment of the invention, and Fig. 2 depicts a front view of the system 10. The Figures show the major components of system 10.

The inspection system 10 comprises a stereo line scan camera unit 14 for scanning the surface 12, while that surface is alternately illuminated by a first and a second illumination unit 16, 18, both together forming an illumination entity 20 or illumination arrangement. The first illumination unit 16 is configured to illuminate the surface 12 with bright field illumination 17 when it is scanned. The second illumination unit 18 is configured for providing a dark field illumination 19 of the surface 12 when it is scanned. The optical axis of the line scan camera unit 14 is indicated in by reference number 15.

The bright field illumination 17 forms a first light field 11, and the dark field illumination 19 forms a second light field 13.

Instead of the bright field illumination 17, a dark field illumination at a relatively large angle to the surface 12 may be generated to form the first light field 11. In this case, the second light field 13 is formed by a dark field illumination at a relatively small angle to the surface 12. In the following, the terms bright field illumination and dark field illumination shall be understood in a way that they comprise this alternative.

Both illumination units 16, 18 are alternately illuminating the surface 14 during the scan, i.e. at any time only one of them is switched on while the other one is switched off. In this way the surface 12 is alternately illuminated with the bright field illumination 17 and with the dark field illumination 19 in a large number of illumination cycles.

The line scan camera unit 14 is configured for generating image data representing the surface 14 while it is illuminated with bright field illumination 17, and further image data representing the surface 14 while it is illuminated with dark field illumination 19.

The system 10 is configured to provide the image data to a processing unit 22, which may be separate or part of the system 10.

The processing unit 22 is connected by a data connection 21 to the line scan camera unit 14. The processing unit 22 is configured for processing the image data of surface 12 generated by camera unit 14. Processing unit 22 automatically determines defects of the surface 12 as well as their characteristics. Further, it automatically determines the physical locations of the defects from the image data.

The processing unit 22 is connected to a user interface 24 in form of a display or graphic user interface, for outputting the defects, their characteristics and their physical locations. The user interface 24 may additionally or alternatively comprise a printer to generate a written report which may include graphic or visual information.

Line scan camera unit 14, first illumination unit 16 and second illumination unit 18 are mechanically connected to each other, so that the illumination units 16, 18 can be moved together with line scan camera 14 relative to the surface 12 to be inspected. Preferably, line scan camera unit 14 together with the illumination units 16, 18 form an inspection unit 26.

The first and second illumination units 16, 18 are configured to generate the bright field illumination 16 and the dark field illumination 18 as alternating flashes. A set of two alternating flashes, one of them formed as a bright field illumination flash and the other one formed as dark field illumination flash, forms one illumination or acquisition cycle or trigger.

The system is configured to provide a large number of illumination cycles at a high frequency, which may be in the range between 10 Hz and about 20 kHz and more, depending on the speed of the movement of the line scan camera unit 14 or the inspection unit 26 relative to surface 14, and also depending on the accuracy of the measurement or image resolution.

Line scan camera unit 14 comprises a line scan camera 28 which may be configured as a color and/or stereo line scan camera for generating at least two rows of pixels in each illumination cycle, wherein one row of pixels is generated during the bright field illumination and the other row of pixels is generated during the dark field illumination.

In other words, the stereo line scan camera 28 is configured to capture in each illumination cycle a first scan profile during the bright field illumination flash and a second scan profile during the dark field illumination flash.

The viewing angle of the stereo line scan camera 28 is visible as dotted lines in Fig. 2, which depicts the two illumination units 16, 18 as well in a front view of the system 10

The line scan camera unit 14 generates interlaced image data representing the surface 12 while illuminated with the bright field illumination and while illuminated with dark field illumination. The processing unit 22 de-interlaces that interlaced image data during processing.

There are two ways to enlarge the field of view of the line scan camera unit 14. First, a wide angle lens can be provided in the camera unit 14. A second way is horizontally stacking a number of camera units 14 together which are preferably enclosed with one housing.

During processing, the processing unit 22 generates color information and a 3d-model of the surface 12, based on the de-interlaced image data based on bright field illumination on the one hand, and on the image data based on dark field illumination on the other hand. Based on this, the defects and their individual properties or characteristics are determined by processing unit 22, including the physical location of each defect.

The illumination units 16, 18 are electronically connected via electric connections 32, 34 to a control unit 36 for controlling the two different illuminations during the scan, and for controlling the line scan camera unit 14.

According to an option, the first light field 11 is formed by illuminating the surface 12 with monochrome light of a first color instead of a bright field illumination, and the second light field 13 is formed by illuminating the surface 12 with monochrome light of a second color instead of a dark field illumination. In this case the line scan camera unit 14 is e.g. formed by only one camera which comprises a color chip to generate the image data in a first channel assigned to the first light field 11 and in a second channel assigned to the second light field 13.

In this case, the first and second light fields 11, 13 are provided without alternating flashing, i.e. at the same time. For example, one light field may use red light, and the other light field may use blue light. The color chip of the camera 28 may provide e.g. a red channel for one light field, and e.g. a blue channel for the other light field. It has the benefit of reducing the data volume and a higher capturing frequency. On the other hand, it loses the majority of visible spectrum color information. This can be retrieved by software to a certain point, which needs however a higher effort, especially for defects which highly rely on different color models like CYMK, RGB, or HSV, etc.

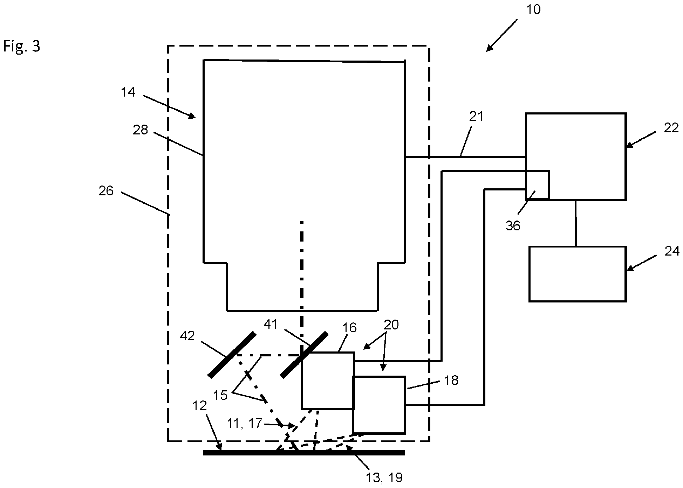

**Fig 3** shows the system 10 according to a second preferred embodiment of the invention, in which a mirror arrangement comprising two mirrors 41, 42 is additionally provided in the optical path 15 between the line scan camera unit 14 and the surface 12 to be scanned. This modification further reduces the size of system 10. All other features and details are the same as described above with reference to Figs. 1 and 2.

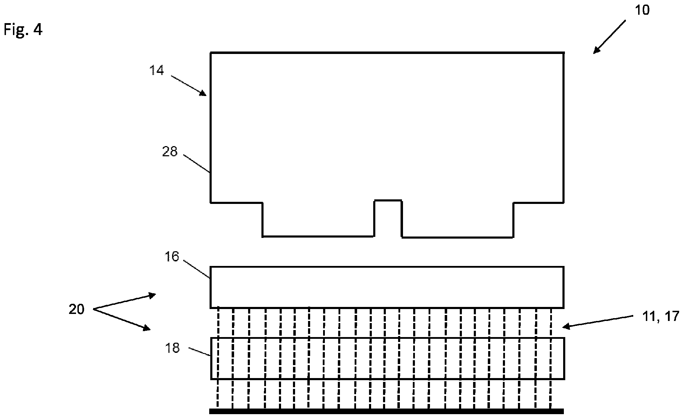

With reference to **Figs. 4 to 6****,** an example of a method for inspecting the outer skin of an aircraft or a component thereof is described the following. The system 10 as described above with reference to Figs. 1 to 3 is used in the method, wherein the first light field 11 is provided by the bright field illumination 17 and the second light field 13 is provided by the dark field illumination 19.

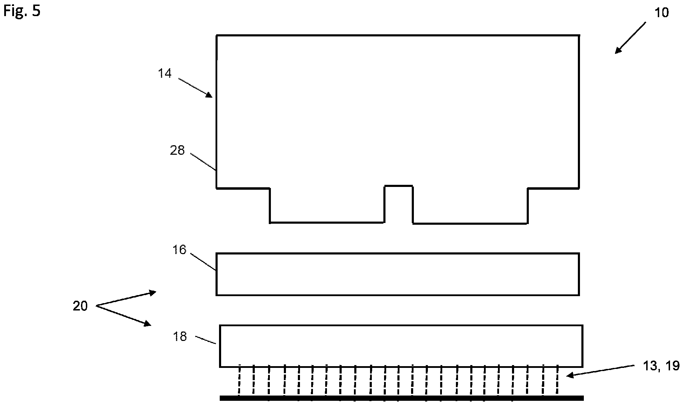

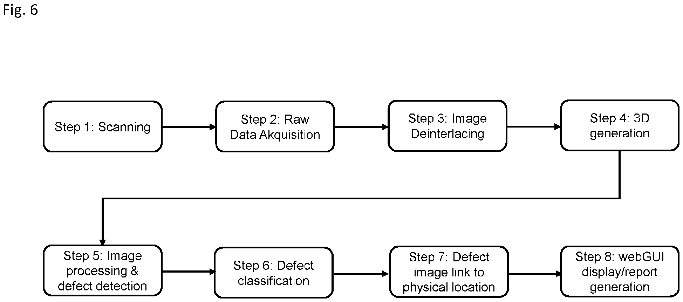

Fig. 4 shows the bright field illumination 17 which is generated by illumination unit 16. Fig. 5 shows the dark field illumination 19 which is generated by illumination unit 18. Fig. 6 depicts a flow chart of the method according to this example.

In a first step, a surface 12 of an outer skin of an aircraft is scanned with line scan camera unit 14 configured as a color stereo line scan camera 28, while the surface 12 is alternately illuminated with bright field illumination 17 and with dark field illumination 19 in a large number of illumination cycles. (see Fig. 6, step 1).

The bright field illumination 17 and the dark field illumination 19 of the surface 12 are provided as alternating flashes during the scan. In each illumination cycle, a set of two alternating flashes is provided, one of them formed as bright field illumination flash 17 and the other one formed as dark field illumination flash19.

The angle at which the light generated by the first illumination unit 16 hits surface 12 to be inspected is about 60° in this example. The angle at which the light generated by the second illumination unit 18 hits surface 12 is for example about 35°.

The stereo line scan camera 28 captures and generates in each illumination cycle a first scan profile during the illumination with the first light field 11 formed as a bright field illumination flash and a second scan profile during the illumination with the second light field 13 formed as a dark field illumination flash. In this way, the camera unit 14 generates two rows of pixels in each illumination cycle, wherein one row of pixels is generated during the bright field illumination and the other row of pixels is generated during the dark field illumination. The image data is interlaced by the camera unit.

The line scan camera unit 14 generates interlaced image data representing the surface 12 while illuminated with the bright field illumination and while illuminated with dark field illumination.

Thus, raw data representing the image of surface 12 during the illumination with the first light field 11 formed as bright field illumination 17 generated by first illumination unit 16, and during the illumination with the second light field 13 formed as dark field illumination 19 generated by second illumination unit 19, is produced. (see Fig.6, step 2).

Then, the image data is processed, wherein it is first de-interlaced by processing unit 22. (see Fig. 6, step 3).

Thereafter, a 3D model of surface 12 is generated (see Fig. 6, step 4) and image processing is performed wherein defects are detected (see Fig. 6, step 5). Color information as well as geometric information is derived from the data to detect the defects and their individual properties. For example, the geometry of deformations and the colors of the surface and their variations are evaluated pixelwise to detect the defects and their properties.

In a next step, the defects are classified (see Fig. 6, step 6). A database comprising information about many types of reference defects and a decision tree is used in this step, to determine the defect class of each detected defect.

Then, a link of the image of the defect to a physical location is generated (see Fig. 6, step 7), and the results are output as a graphic and/or written report on a display, printer or any other type of output unit including web-based user interfaces.

Optionally, the method for inspecting the outer skin of an aircraft uses light of different colors for providing the first light field 11 and the second light field 13 to illuminate the surface 12, instead of bright field illumination 17 and dark field illumination 19 as described above. In this case, the camera 28 comprises a color chip, and only one camera may be used. In this case, it is not necessary to provide alternating illuminations of the surface 12. The steps are the same as shown in Fig. 6, and the above description applies in an analogous way. In this case, the illumination entity 20 does not necessarily comprise both illumination units 16, 18, but may comprise only one of them.

### List of reference signs:

- 10: inspection system
- 11: first light field
- 12: surface
- 13: second light field
- 14: camera unit
- 15: optical axis
- 16: first illumination unit
- 17: bright field illumination
- 18: second illumination unit
- 19: dark field illumination
- 20: illumination entity
- 21: data connection
- 22: processing unit
- 24: user interface
- 26: inspection unit
- 28: stereo line scan camera
- 32, 34: electric connections
- 36: control unit
- 41, 42: mirrors

## Claims

1. Method for inspecting the outer skin of an aircraft or a component thereof, comprising:
a) scanning a surface (12) of an outer skin of an aircraft with a line scan camera unit (14) while the surface (12) is illuminated with a first light field (11) and with a second light field (13);
b) generating image data representing the surface (12) while it is scanned;
c) processing the image data, wherein defects of the surface (12) as well as their characteristics and physical locations are automatically determined from the image data representing the surface (12) during its illumination with the first light field (11) and from the image data representing the surface (12) during its illumination with the second light field (13); and
d) outputting the defects, their characteristics and their physical locations.

2. Method according to claim 1, **characterized in that** first light field (11) is formed as a bright field illumination (17) or a dark field illumination at a relatively large angle to the surface (12), and the second light field (13) is formed as a dark field illumination (19) or a dark field illumination at a relatively small angle to the surface (12), wherein the surface (12) is alternately illuminated with the first light field (11) and the second light field (13) in a large number of illumination cycles while the image data is generated.

3. Method according to claim 2, **characterized in that** the bright field illumination (17) and the dark field illumination (19) of the surface (12) are provided as alternating flashes.

4. Method according to claim 2 or 3, **characterized in that** at least two rows of pixels are generated in each illumination cycle, wherein one row of pixels is generated during the bright field illumination (17) of the surface (12) and the other row of pixels is generated the during dark field illumination (19) of the surface (12).

5. Method according to claim 1, **characterized in that** the first light field (11) is provided by generating light of a first color and the second light field (13) is provided by generating light of a second color, wherein the line scan camera unit (14) comprises a color chip to generate the image data in a first channel assigned to the first light field (11) and in a second channel assigned to the second light field (13).

6. Method according to one of the preceding claims, **characterized in that** the line scan camera unit (14) comprises a stereo line scan camera (28).

7. Method according to one of the preceding claims, **characterized in that** the image data generated during illumination with the first light field (11) and the image data generated during illumination with the second light field (13) is interlaced by the line scan camera unit (14) and de-interlaced during the processing of the image data.

8. Method according to one of the preceding claims, **characterized in that** the frequency of the illumination cycles is between 10 Hz and 20 kHz.

9. Method according to one of the preceding claims, **characterized in that** the detected defects are classified according to their criticality during the processing, based on their individual characteristics determined from the image data generated during illumination with the first light field (11) and the image data generated during illumination with the second light field (13).

10. System for inspecting the outer skin of an aircraft or a component thereof, comprising:
a line scan camera unit (14) for scanning a surface (12) of an outer skin of an aircraft to generate image data of the surface (12), and
an illumination entity (20) configured to illuminate the surface (12) with a first light field (11) and with a second light field (13) when it is scanned;
wherein the system is designed for providing the image data to a processing unit (22) configured for detecting defects of the surface (12) as well as their characteristics and physical locations from the image data representing the surface (12) during its illumination with the first light field (11) and from the image data representing the surface (12) during its illumination with the second light field (13).

11. System according to claim 9, **characterized in that** it comprises a processing unit (22) and a user interface for outputting the defects, their characteristics and their physical locations.

12. System according to claim 10 or 11, **characterized in that** the illumination entity (20) comprises a first illumination unit (16) configured to generate the first light field (11) as a bright field illumination (17) or as a dark field illumination at a relatively large angle to the surface (12), and a second illumination unit (18) configured to generate the second light field (13) as a dark field illumination (19) or as a dark field illumination at a relatively small angle to the surface (12), wherein the first light field (11) and the second light field (13) are alternating in a large number of illumination cycles or are formed as alternating flashes.

13. System according to claim 12, **characterized in that** the line scan camera unit (14) comprises a stereo line scan camera (28) for generating at least two rows of pixels in each illumination cycle, wherein one row of pixels is generated during the bright field illumination (17) and the other row of pixels is generated during the dark field illumination (19).

14. System according to claim 10 or 11, **characterized in that** the illumination entity (20) is configured to generate light of a first color as the first light field (11) and light of a second color as the second light field (13), and that the line scan camera unit (14) comprises a color chip to generate image data in a first channel assigned to the first light field (11) and in a second channel assigned to the second light field (13).

15. System according to one of claims 10 to 14, **characterized in that** the line scan camera unit (14) is configured to interlace the image data generated during illumination with the first light field (11) and the image data generated during illumination with the second light field (13), and the processing unit (22) is configured to de-interlace the image data.

16. System according to one of claims 10 to 15, **characterized in that** the processing unit (22) is configured
- to classify the defects according to their criticality based on their individual characteristics determined from the image data generated during the illumination with the first light field (11) and during the illumination with the second light field (13) and/or
- to generate color information of each defect from the image data generated during illumination with the first light field (11) and the image data generated during illumination with the second light field (13).

17. System according to one of claims 9 to 16, **characterized by** a mirror arrangement (41, 42) provided in the optical path (15) between the line scan camera unit (14) and the surface (12) to be scanned.

18. System according to one of claims 9 to 17, **characterized in that** two or more line scan camera units (14) are horizontally stacked to extend the field of view.
